(19) **Europäisches Patentamt / European Patent Office / Office européen des brevets**

(11) **EP 4 322 601 A1**

(12) # EUROPEAN PATENT APPLICATION
published in accordance with Art. 153(4) EPC

(43) Date of publication:
**14.02.2024 Bulletin 2024/07**

(21) Application number: **21935931.2**

(22) Date of filing: **05.04.2021**

(51) International Patent Classification (IPC):
**H04W 24/10** (2009.01)    **H04W 36/16** (2009.01)

(52) Cooperative Patent Classification (CPC):
**H04W 24/10; H04W 36/16**

(86) International application number:
**PCT/JP2021/014519**

(87) International publication number:
**WO 2022/215123 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a receiving section that receives configuration of a specific index indicating a serving cell and a non-serving cell, the specific index being created based on a physical cell ID and different from the physical cell ID, and a control section that controls transmission of a channel state information report corresponding to the configured specific index. According to one aspect of the present disclosure, transmission or reception of a plurality of channels/signals from a cell including a non-serving cell can be appropriately performed.

| SERVING CELL INDEX (PCI) | NEW ID |
|---|---|
| SERVING CELL (PCI = 520) | 0 |
| NON−SERVING CELL #1 (PCI = 124) | 1 |
| NON−SERVING CELL #2 (PCI = 51) | 2 |
| NON−SERVING CELL #3 (PCI = 1005) | 3 |

FIG. 4

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems, layer 1/layer 2 (L1/L2) inter-cell mobility for facilitating more efficient DL/UL beam management (for implementing lower delay and overhead) has been under study.

In L1/L2 inter-cell mobility, a serving cell can be changed using a function such as beam control, without performing radio resource control (RRC) reconfiguration. In other words, transmission and reception to and from a non-serving cell can be performed, without performing handover. For handover, RRC reconnection is required, which generates a period in which data communication cannot be performed, and thus L1/L2 inter-cell mobility that does not require handover is preferable.

However, in at least one of inter-cell mobility including the non-serving cell and a multi-TRP scenario, how to control transmission or reception of channels/signals transmitted from the same cell/TRP or from different cells/TRPs presents a problem. Unless transmission and reception of channels/signals transmitted from the same cell/TRP or from each of different cells/TRPs are appropriately performed, throughput may be deteriorated or communication quality may be deteriorated.

In view of this, the present disclosure has one object to provide a terminal, a radio communication method, and a base station that can appropriately perform transmission or reception of a plurality of channels/signals from a cell including a non-serving cell.

Solution to Problem

A terminal according to one aspect of the present disclosure includes a receiving section that receives configuration of a specific index indicating a serving cell and a non-serving cell, the specific index being created based on a physical cell ID and different from the physical cell ID, and a control section that controls transmission of a channel state information report corresponding to the configured specific index.

Advantageous Effects of Invention

According to one aspect of the present disclosure, transmission or reception of a plurality of channels/signals from a cell including a non-serving cell can be appropriately performed.

Brief Description of Drawings

[FIG. 1] FIGS. 1A and 1B are diagrams to show configuration examples of TCI states.
[FIG. 2] FIGS. 2A and 2B are diagrams to show examples of inter-cell mobility.
[FIG. 3] FIG. 3 is a diagram to show an example of a CSI report including information indicating a serving cell/non-serving cell.
[FIG. 4] FIG. 4 is a diagram to show a first example of a relationship between a serving cell/non-serving cell index or a PCI and a new ID.
[FIG. 5] FIG. 5 is a diagram to show a second example of a relationship between the serving cell/non-serving cell index or the PCI and the new ID.
[FIG. 6] FIG. 6 is a diagram to show an example of a method of configuring a relationship between the serving cell/non-serving cell index or the PCI and the new ID.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.

Description of Embodiments

(CSI Report)

In NR, a UE measures a channel state by using a certain reference signal (or resources for the reference signal), and feeds back (reports) channel state information (CSI) to a base station.
The UE may measure the channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), or the like.
A CSI-RS resource may include at least one of a non zero power (NZP) CSI-RS and CSI-Interference Management (IM). The SS/PBCH block is a block including a synchronization signal (for example, a primary synchronization signal (PSS) or a secondary synchronization signal (SSS)) and a PBCH (and its corresponding DMRS), and may be referred to as an SS block (SSB) or the like. An SSB index may be given to a time position of the SSB in a half frame.
Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in layer 1), L1-Reference Signal Received Quality (RSRQ), an L1-Signal to Interference plus Noise Ratio (SINR), an L1-Signal to Noise Ratio (SNR), and the like.
The CSI may include a plurality of parts. The first part of the CSI (CSI part 1) may include information (for example, the RI) having relatively a small number of bits. The second part of the CSI (CSI part 2) may include information (for example, the CQI) having relatively a large number of bits, such as information determined based on CSI part 1.
As a feedback method of the CSI, (1) a periodic CSI (P-CSI) report, (2) an aperiodic CSI (A (AP)-CSI) report, (3) a semi-persistent CSI report (Semi-Persistent CSI (SP-CSI)) report, and the like have been under study.
The UE may be notified of information (which may be referred to as CSI report configuration information) related to the CSI report by using higher layer signaling, physical layer signaling (for example, downlink control information (DCI)), or a combination of these. The CSI report configuration information may be, for example, configured using an RRC information element "CSI-ReportConfig".
Here, the higher layer signaling may be, for example, any one of Radio Resource Control (RRC) signaling, Medium Access Control (MAC) signaling, broadcast information, and the like, or a combination of these.
As the MAC signaling, for example, a MAC control element (MAC CE), a MAC Protocol Data Unit (PDU), or the like may be used. The broadcast information may be, for example, a master information block (MIB), a system information block (SIB), minimum system information (Remaining Minimum System Information (RMSI)), other system information (OSI), or the like.
The CSI report configuration information may include, for example, information related to a report period, an offset, or the like, and these may be expressed in the unit of certain time (the unit of a slot, the unit of a subframe, the unit of a symbol, or the like). The CSI report configuration information may include a configuration ID (CSI-ReportConfigId). With the configuration ID, parameters such as a type of a CSI report method (whether or not the SP-CSI is used or the like) and a report period may be identified. The CSI report configuration information may include information (CSI-ResourceConfigId) indicating which CSI measured by using which signal (or resources for which signal) is to be reported.

(Beam Management)

In Rel-15 NR, a method of beam management (BM) has hitherto been under study. In the beam management, performing beam selection based on L1-RSRP reported by the UE has been under study. To change (switch) beams of a certain signal/channel may correspond to changing of a (Transmission Configuration Indication state) of the signal/channel.

Note that the beam selected through beam selection may be a transmit beam (Tx beam), or may be a receive beam (Rx beam). The beam selected through beam selection may be a beam of the UE, or may be a beam of the base station.

The UE may report (transmit) measurement results for beam management by using a PUCCH or a PUSCH. The measurement results may be, for example, the CSI including at least one of L1-RSRP, L1-RSRQ, L1-SINR, L1-SNR, and the like. The measurement results may be referred to as beam measurement, beam measurement results, a beam report, a beam measurement report, or the like.

CSI measurement for the beam report may include interference measurement. The UE may measure channel quality, interference, or the like by using resources for CSI measurement, and derive the beam report. The resources for CSI measurement may be, for example, at least one of resources of the SS/PBCH block, resources of the CSI-RS, other reference signal resources, and the like. Configuration information of a CSI measurement report may be configured for the UE by using higher layer signaling.

In the beam report, results of at least one of channel quality measurement and interference measurement may be included. The results of channel quality measurement may include, for example, L1-RSRP. The results of interference measurement may include L1-SINR, L1-SNR, L1-RSRQ, other indexes related to interference (for example, any index other than L1-RSRP), and the like.

Note that the resources for CSI measurement for beam management may be referred to as resources for beam measurement. A signal/channel as a target of the CSI measurement may be referred to as a signal for beam measurement. The CSI measurement/report may be interpreted as at least one of measurement/report for beam management, beam measurement/report, radio link quality measurement/report, and the like.

The CSI report configuration information in consideration of beam management of NR at present is included in an RRC information element "CSI-ReportConfig". Information in the RRC information element "CSI-ReportConfig" will be described.

The CSI report configuration information (CSI-ReportConfig) may include report quantity information (which may be expressed as "report quantity", or an RRC parameter "reportQuantity") being information of a parameter to be reported. The report quantity information is defined as a type of an ASN.1 object referred to as a "choice type (choice)". Thus, one of parameters (cri-RSRP, ssb-Index-RSRP, and the like) defined as the report quantity information is configured.

The UE configured with a higher layer parameter (for example, an RRC parameter "groupBasedBeamReporting") included in the CSI report configuration information being enabled may include a plurality of resource IDs for beam measurement (for example, the SSBRI, the CRI) and a plurality of measurement results (for example, the L1-RSRP) corresponding to these in the beam report regarding each report configuration.

The UE configured with one or more report target RS resources using a higher layer parameter (for example, an RRC parameter "nrofReportedRS") included in the CSI report configuration information may include one or more resource IDs for beam measurement and one or more measurement results (for example, the L1-RSRP) corresponding to these in the beam report regarding each report configuration.

(TCI, Spatial Relation, QCL)

In NR, control of reception processing (for example, at least one of reception, demapping, demodulation, and decoding) and transmission processing (for example, at least one of transmission, mapping, precoding, modulation, and coding) in the UE regarding at least one of a signal and a channel (which is expressed as a signal/channel) based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (that is, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one of Radio Resource Control (RRC) signaling, Medium Access Control (MAC) signaling, broadcast information, and the like, or a combination of these.

As the MAC signaling, for example, a MAC control element (MAC CE), a MAC Protocol Data Unit (PDU), or the like may be used. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state (RRC "TCI-state IE") configured using higher layer signaling may include one or a plurality of pieces of QCL information ("QCL-Info"). The QCL information may include at least one of information related to the RS to have a QCL relationship (RS relation information) and information indicating the QCL type (QCL type information). The RS relation information may include information such as an index of the RS (for example, an SSB index, or a non-zero power CSI-RS (NZP CSI-RS) resource ID (Identifier)), an index of a cell in which the RS is located, and an index of a Bandwidth Part (BWP) in which the RS is located.

In Rel-15 NR, as the TCI state of at least one of the PDCCH and the PDSCH, both of the RS of QCL type A and the RS of QCL type D, or only the RS of QCL type A may be configured for the UE.

When the TRS is configured as the RS of QCL type A, regarding the TRS, it is assumed that the same TRS is periodically transmitted for a long period of time, unlike a demodulation reference signal (DMRS) for the PDCCH or the PDSCH. The UE can measure the TRS and calculate the average delay, the delay spread, and the like.

In the TCI state of the DMRS for the PDCCH or the PDSCH, the UE configured with the TRS as the RS of QCL type A can assume that the DMRS for the PDCCH or the PDSCH and the QCL type A parameters (average delay, delay spread, and the like) for the TRS are the same, and can thus determine the type A parameters (average delay, delay spread, and the like) for the DMRS for the PDCCH or the PDSCH from measurement results for the TRS. When performing channel estimation for at least one of the PDCCH and the PDSCH, the UE can use the measurement results for the TRS to perform more accurate channel estimation.

The UE configured with the RS of QCL type D can use the RS of QCL type D to determine a UE receive beam (a spatial domain reception filter, a UE spatial domain reception filter).

The RS of QCL type X for the TCI state may mean the RS in a relationship of QCL type X with (the DMRS for) a certain channel/signal, and the RS may be referred to as a QCL source of QCL type X for the TCI state.

(Unified/Common TCI Framework)

According to a unified TCI framework, channels of the UL and the DL can be controlled by a common framework. In the unified TCI framework, a common beam (common TCI state) may be indicated and applied to all of the channels of the UL and the DL, or a common beam for the UL may be applied to all of the channels of the UL and a common beam for the DL may be applied to all of the channels of the DL, unlike Rel. 15 in which the TCI state or the spatial relation is defined for each channel.

One common beam for both of the DL and the UL, or a common beam for the DL and a common beam for the UL (two common beams in total) have been under study.

The UE may assume the same TCI state (a joint TCI state, a joint TCI pool, a joint common TCI pool) for the UL and the DL. The UE may assume different TCI states (a separate TCI state, a separate TCI pool, a UL separate TCI pool and a DL separate TCI pool, a separate common TCI pool, a UL common TCI pool and a DL common TCI pool) respectively for the UL and the DL.

Default beams of the UL and the DL may be unified using beam management based on a MAC CE (MAC CE level beam indication). The default beams may be unified with a default UL beam (spatial relation) by updating a default TCI state of the PDSCH.

The common beam/unified TCI state may be indicated from the same TCI pool for both of the UL and the DL (a joint common TCI pool, a joint TCI pool, a set), using beam management based on DCI (DCI level beam indication). M (> 1) TCI states may be activated by the MAC CE. The UL/DL DCI may select one from M active TCI states. The selected TCI state may be applied to the channels/RSs of both of the UL and the DL.

The TCI pool (set) may be a plurality of TCI states configured by an RRC parameter, or may be a plurality of TCI states (active TCI states, an active TCI pool, a set) activated by the MAC CE out of the plurality of TCI states configured by the RRC parameter. Each TCI state may be a QCL type A/D RS. As the QCL type A/D RS, an SSB, a CSI-RS, or an SRS may be configured.

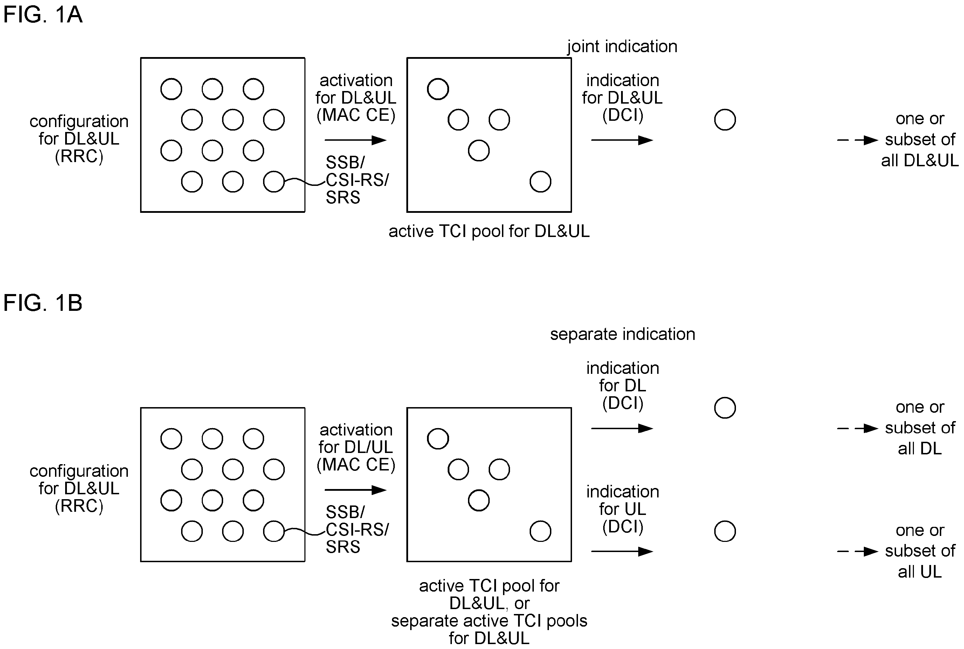

In the example of FIG. 1A, the RRC parameter (information element) configures a plurality of TCI states for both of the DL and the UL. The MAC CE may activate a plurality of TCI states out of the plurality of configured TCI states. The DCI may indicate one of the plurality of activated TCI states. The DCI may be UL/DL DCI. The indicated TCI state may be applied to at least one (or all) of the channels/RSs of the UL/DL. One DCI may indicate both of a UL TCI and a DL TCI.

In the example of FIG. 1A, one point may be one TCI state applied to both of the UL and the DL, or may be two TCI states respectively applied to the UL and the DL.

At least one of a plurality of TCI states configured by the RRC parameter and the plurality of TCI states activated by the MAC CE may be referred to as a TCI pool (a common TCI pool, a joint TCI pool, a TCI state pool). The plurality of TCI states activated by the MAC CE may be referred to as an active TCI pool (active common TCI pool).

Note that, in the present disclosure, the higher layer parameter (RRC parameter) for configuring the plurality of TCI states may be referred to as configuration information for configuring the plurality of TCI states, or simply as "configuration information". In the present disclosure, indication of one of the plurality of TCI states using DCI may be reception of indication information for indicating one of the plurality of TCI states included in the DCI, or may simply be reception of "indication information".

In the example of FIG. 1B, the RRC parameter configures a plurality of TCI states (joint common TCI pool) for both of the DL and the UL. The MAC CE may activate a plurality of TCI states (active TCI pool) out of the plurality of configured TCI states. (Separate) active TCI pools respectively for the UL and the DL may be configured/activated.

The DL DCI or a new DCI format may select (indicate) one or more (for example, one) TCI state(s). The selected TCI state may be applied to one or more (or all) of the channels/RSs of the DL. The DL channel may be a PDCCH/PDSCH/CSI-RS. The UE may determine the TCI state of each channel/RS of the DL, using an operation (TCI framework) of the TCI state of Rel. 16. The UL DCI or a new DCI format may select (indicate) one or more (for example, one) TCI state(s). The selected TCI state may be applied to one or more (or all) of the UL channels/RSs. The UL channel may be a PUSCH/SRS/PUCCH. In this manner, different DCIs may separately indicate the UL TCI and the DL DCI.

Existing DCI format 1_2/1_2 may be used for indication of the common TCI state.

The common TCI framework may include separate TCI states for the DL and the UL.

The common TCI framework may include separate TCI states for the DL and the UL. It is not preferable to indicate the common TCI state of only the UL, using DCI format 1_1/1_2.

(Inter-Cell Mobility)

Incidentally, in NR, a scheme in which one or a plurality of transmission/reception points (TRPs) (multi-TRP (MTRP)) perform DL transmission to the UE has been under study. A scheme in which the UE performs UL transmission to one or a plurality of TRPs has been under study.

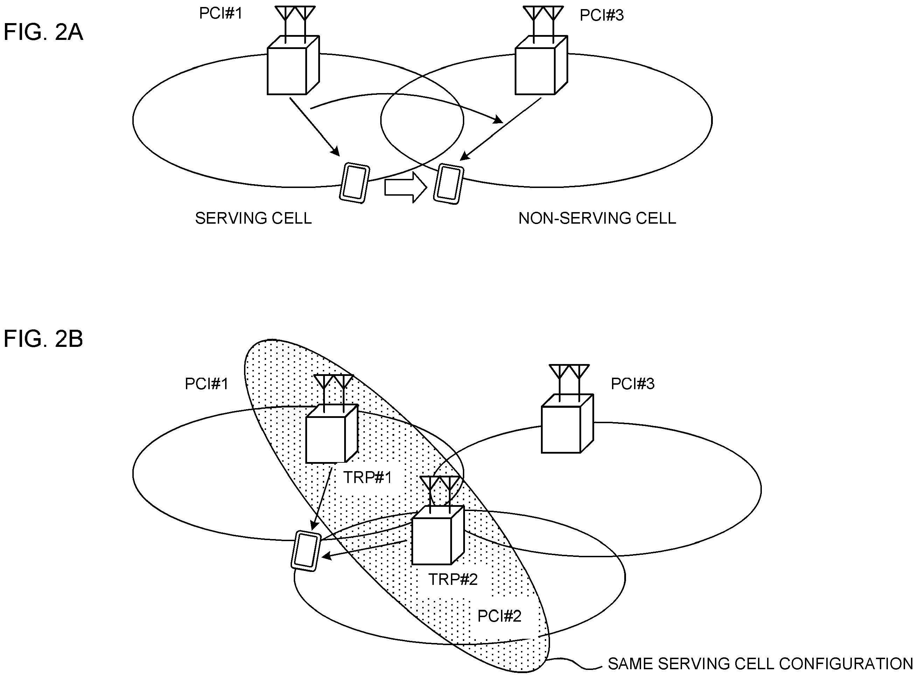

It is considered that the UE receives a channel/signal from a plurality of cells/TRPs in inter-cell mobility (for example, L1/L2 inter cell mobility) (see FIGS. 2A and 2B).

FIG. 2A shows an example of inter-cell mobility (for example, single-TRP inter-cell mobility) including a non-serving cell. A single TRP may mean a case (which may be referred to as a single mode) in which only one TRP of the multi-TRP performs transmission to the UE. A CORESET pool index may indicate the single TRP. Here, a case is shown in which the UE receives a channel/signal from the base station/TRP in cell #1 being a serving cell and the base station/TRP in cell #3 being other than the serving cell (non-serving cell). For example, this corresponds to a case in which the UE switches/changes from cell #1 to cell #3 (for example, fast cell switch).

In this case, the TCI state may be updated by DCI/MAC CE, and a port (for example, an antenna port)/TRP/point may be dynamically selected. Different physical cell IDs (for example, PCIs) are configured for cell #1 and cell #3.

FIG. 2B shows an example of a multi-TRP scenario (for example, inter-cell mobility (Multi-TRP inter-cell mobility) of a case in which the multi-TRP is used). Here, a case is shown in which the UE receives a channel/signal from TRP #1 and TRP2. Here, a case is shown in which TRP #1 is present in cell #1 (PCI #1) and TRP #2 is present in cell #2 (PCI #2).

The multi-TRP (TRPs #1 and #2) may be connected with an ideal/non-ideal backhaul, and information, data, and the like may be exchanged therebetween. Different code words (CWs) and different layers may be transmitted from each TRP of the multi-TRP. As one mode of multi-TRP transmission, as shown in FIG. 1B, non-coherent joint transmission (NCJT) may be used. Here, a case is shown in which NCJT is performed among a plurality of cells (for example, cells having different PCIs). Note that the same serving cell configuration may be applied to/configured for TRP #1 and TRP #2.

In NCJT, for example, TRP #1 performs modulation mapping on a first code word and performs layer mapping so as to transmit a first signal/channel (for example, a PDSCH) by using first precoding for a first number of layers (for example, two layers). TRP #2 performs modulation mapping on a second code word and performs layer mapping so as to transmit a second signal/channel (for example, a PDSCH) by using second precoding for a second number of layers (for example, two layers).

It may be defined that a plurality of PDSCHs (multi-PDSCH) subjected to NCJT partially or entirely overlap in at least one of time and frequency domains. In other words, at least one of time and frequency resources of the first PDSCH from TRP #1 and the second PDSCH from TRP #2 may overlap.

It may be assumed that these first PDSCH and second PDSCH are not in a relationship of quasi-co-location (QCL) (not quasi-co-located). Reception of the multi-PDSCH may be interpreted as simultaneous reception of the PDSCHs that are not of a certain QCL type (for example, QCL type D).

The plurality of PDSCHs (which may be referred to as the multi-PDSCH (multiple PDSCH)) from the multi-TRP may be scheduled using one DCI (single DCI (S-DCI), single PDCCH) (single master mode). One DCI may be transmitted from one TRP of the multi-TRP. The configuration of using one DCI in the multi-TRP may be referred to as single DCI-based multi-TRP (mTRP/MTRP).

A case (which may be referred to as a master slave mode) may be applied in which each of the multi-TRP transmits a part of a control signal to the UE and the multi-TRP transmits a data signal.

The plurality of PDSCHs from the multi-TRP may be scheduled using a plurality of DCIs (multi-DCI (M-DCI), multi-PDCCH (multiple PDCCH)), respectively (multi-master mode). The plurality of DCIs may be transmitted from the multi-TRP, respectively. The configuration of using the plurality of DCIs in the multi-TRP may be referred to as multi-DCI-based multi-TRP (mTRP/MTRP).

The UE may assume to transmit, to different TRPs, different CSI reports related to the respective TRPs. Such CSI feedback may be referred to as separate feedback, separate CSI feedback, or the like. In the present disclosure, "separate" may be interchangeably interpreted as "independent".

Use of a mechanism of the TCI state of Rel. 15/16 for inter-cell mobility using the multi-TRP has been under study, and use of a new mechanism for inter-cell mobility using the single TRP has been under study. In the mechanism of the TCI state of Rel. 15/16, the CSI-RS can be configured as the TCI state of the PDSCH/PDCCH (the DMRS of the PDSCH/PDCCH) (the TCI state of the PDSCH/PDCCH can refer to the CSI-RS). It is possible to configure the SSB as the TCI state of the CSI-RS. However, it is not possible to directly configure the SSB as the TCI state of the PDSCH/PDCCH. In the new mechanism (single-TRP inter-cell mobility) of Rel. 17 using the unified TCI state, (direct) configuration of the SSB as the TCI state of the PDSCH/PDCCH has been under study.

Note that a case in which X is configured as the TCI state of the PDSCH/DCCH, a case in which the TCI state of the PDSCH/PDCCH refers to X, and a case in which the QCL source of the PDSCH/PDCCH is X may be interchangeably interpreted.

In future radio communication systems, inter-cell mobility (L1/L2 inter-cell mobility) as described above for facilitating more efficient DL/UL beam management (for implementing lower delay and overhead) has been under study.

In L1/L2 inter-cell mobility, the serving cell can be changed using a function such as beam control, without performing RRC reconfiguration. In other words, transmission and reception to and from the non-serving cell can be performed, without performing handover. For handover, RRC reconnection is required, which generates a period in which data communication cannot be performed, and thus L1/L2 inter-cell mobility that does not require handover is preferable.

However, in at least one of inter-cell mobility including the non-serving cell and the multi-TRP scenario, how to control transmission or reception of channels/signals transmitted from the same cell/TRP or from different cells/TRPs presents a problem. Unless transmission and reception of channels/signals transmitted from the same cell/TRP or from each of different cells/TRPs are appropriately performed, throughput may be deteriorated or communication quality may be deteriorated.

In view of this, the inventors of the present invention came up with the idea of control for appropriately performing transmission or reception of a plurality of channels/signals from a cell including the non-serving cell.

Embodiments according to the present disclosure will be described in detail with reference to the drawings as follows. The radio communication methods according to respective embodiments may each be employed individually, or may be employed in combination.

In the present disclosure, a CSI report and a beam report may be interchangeably interpreted. Reporting and measurement may be interchangeably interpreted.

In the present disclosure, a panel, an Uplink (UL) transmission entity, a point, a TRP, a spatial relation, a control resource set (CORESET), a PDSCH, a code word, a base station, an antenna port of a certain signal (for example, a demodulation reference signal (DMRS) port), an antenna port group of a certain signal (for example, a DMRS port group), a group for multiplexing (for example, a code division multiplexing (CDM) group, a reference signal group, a CORESET group), a CORESET pool, a CORESET subset, a CW, a redundancy version (RV), and a layer (a MIMO layer, a transmission layer, a spatial layer) may be interchangeably interpreted. A panel Identifier (ID) and a panel may be interchangeably interpreted. In the present disclosure, a TRP index, a TRP ID, a CORESET pool index, ordinal numbers (first and second) of TCI states in two TCI states, and a TRP may be interchangeably interpreted.

In the present disclosure, a TCI state, a common beam, a common TCI, a common TCI state, a unified TCI, a unified TCI state, a UL TCI, a DL TCI, a joint TCI state, a joint UL/DL TCI state, a TCI state that can be applied to the DL and the UL, a TCI state that is applied to a plurality (a plurality of types) of channels/RSs, a TCI state that can be applied to a plurality of types of channels/RSs, and a PL-RS may be interchangeably interpreted.

In the present disclosure, a TCI state, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a beam, a spatial domain filter, a space setting, a TCI state, a UL TCI state, a unified TCI state, a unified beam, a common TCI state, a common beam, a TCI assumption, a QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D of a TCI state/QCL assumption, an RS of QCL type A of a TCI state/QCL assumption, spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a source of a DL-RS, an SSB, a CSI-RS, and an SRS may be interchangeably interpreted.

In the present disclosure, a single TRP, a channel using a single TRP, a channel using one TCI state/spatial relation, no enabling of a multi-TRP by RRC/DCI, no enabling of a plurality of TCI states/spatial relations by RRC/DCI, and no configuration of one CORESET pool index (CORESETPoolIndex) value for any of the CORESETs and no mapping of any code point of a TCI field to two TCI states may be interchangeably interpreted.

In the present disclosure, a multi-TRP, a channel using a multi-TRP, a channel using a plurality of TCI states/spatial relations, enabling of a multi-TRP by RRC/DCI, enabling of a plurality of TCI states/spatial relations by RRC/DCI, and at least one of a multi-TRP based on single DCI and a multi-TRP based on multi-DCI may be interchangeably interpreted.

In the present disclosure, a cell, a CC, a carrier, a BWP, and a band may be interchangeably interpreted.

In the present disclosure, an index, an ID, an indicator, and a resource ID may be interchangeably interpreted.

Note that, in the present disclosure, "A/B" may be interpreted as "at least one of A and B".

In the present disclosure, CSI report configuration (CSI-ReportConfig) and CSI report setting may be interchangeably interpreted. CSI resource configuration (CSI-ResourceConfig) and CSI resource setting may be interchangeably interpreted.

In the present disclosure, an RS, a beam, measurement results, and configuration of an RS may be interchangeably interpreted. The RS may mean at least one of a CRI and an SSBRI in the CSI report. L1-RSRP and L1-SINR may be interchangeably interpreted. An SSB, an SSB index, and an SSBRI may be interchangeably interpreted.

(Radio Communication Method)

The UE may receive configuration of a specific index (a new ID to be described later) indicating the serving cell and the non-serving cell, which is created based on a physical cell ID (Physical Cell Identifier (PCI)) and different from the physical cell ID, and control transmission of a channel state information report (CSI report) corresponding to the configured specific index.

<CSI Report Using New ID>

[1-Bit Indicator]

A 1-bit indicator indicating the serving cell/non-serving cell may be applied. For example, "0" may indicate the serving cell, and "1" may indicate the non-serving cell. Alternatively, "1" may indicate the serving cell, and "0" may indicate the non-serving cell.

[New ID]

As information indicating the serving cell/non-serving cell, a new ID (for example, a re-created (re-indexed, re-assigned, re-numbered) index indicating the non-serving cell, or a group ID of a CMR) or a PCI (a directly used PCI) may be applied. The new ID may be configured only for the serving cell and the non-serving cell that are used (that can be used) by the UE. In other words, the number of bits can be reduced because that of the new ID is smaller than that of the total of the serving cell and the non-serving cell or the PCI.

The new ID may be dependent upon RS configuration signaling (CSI report configuration/CSI resource configuration). Regarding the new ID, for example, "0" may indicate the serving cell, "1" may indicate non-serving cell #1, and "2" may indicate non-serving cell #2. In other words, the new ID may indicate one of the serving cell and one or more non-serving cells.

The re-created index indicating the non-serving cell may be associated with a part of the PCIs. By using the re-created index instead of the PCI, the number of information bits can be reduced, and overhead of RRC signaling can be reduced. The re-created index may be referred to as a re-creation index.

When there is one non-serving cell, the new ID may be information similar to the 1-bit indicator described above. In other words, the new ID may mean the 1-bit indicator described above. A parameter name of the new ID is not limited to "New ID", and any name may be used.

[CSI Report]

When the UE receives the same (one) CSI report configuration/CSI resource configuration including both of configuration of the RS (for example, the SSB) of the serving cell and configuration of the RS (for example, the SSB) of the non-serving cell, the UE may control transmission (report) of the CSI report including the information indicating the serving cell/non-serving cell (corresponding to the information), in addition to conventional report contents. The information is information indicating an association between the reference signal/measurement results and the serving cell or the non-serving cell, and is, for example, the 1-bit indicator described above, the new ID, or the like. The report contents may be, for example, at least one of the SSB index, the CRI, the L1-RSRP, the L1-SINR, the L1-SNR, the LI, the RI, the PMI, and the CQI.

For example, the UE may be configured with a plurality of non-serving cell configurations with separate RRC parameters, and configured with the L1 beam report (CSI report) of a plurality of non-serving cells, using the new ID. Then, one non-serving cell out of the plurality of non-serving cells may be selected, and the TCI state may be configured.

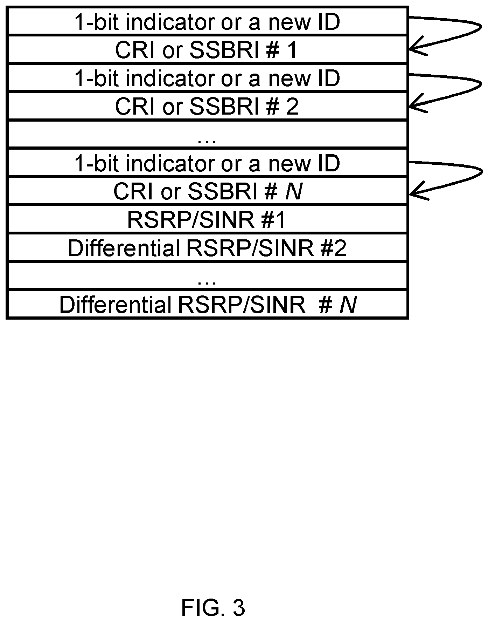

FIG. 3 is a diagram to show an example of the CSI report including the information indicating the serving cell/non-serving cell. In FIG. 3, the 1-bit indicator described above indicating the serving cell/non-serving cell or the new ID indicating the serving cell/non-serving cell is used. As shown in FIG. 3, "1-bit indicator" or "new ID" each corresponds to "CRI or SSBRI #X" (X = 1 to N).

<First Embodiment>

When inter-cell mobility of a single transmission/reception point (single TRP) (for example, see FIG. 2A) or inter-cell mobility of a plurality of transmission/reception points (multi-TRP) (for example, see FIG. 2B) is applied, the UE may receive the TCI state that corresponds to a cell index (PCI/serving cell index/new ID) and includes the cell index (or may receive the TCI state together with the cell index). The TCI state may be the unified TCI state. The UE may determine that the TCI state is the TCI state corresponding to/associated with the cell index. The TCI state may be a TCI state having the received cell index or a cell index corresponding to/associated with the cell index as the QCL source. Regarding the TCI state, the UE may determine that a channel/signal is to be transmitted from a cell having a cell index corresponding to/associated with the cell index (received cell index).

Single-TRP inter-cell mobility (for example, see FIG. 2A) or multi-TRP inter-cell mobility (for example, see FIG. 2B) may be hereinafter simply referred to as inter-cell mobility. At least one of the PCI, the serving cell index/non-serving cell index, and the new ID may be referred to as a cell index.

In single-TRP/multi-TRP inter-cell mobility, the cell index may be transmitted in CSI-RS resources (resources-ForChannelMeasurement (CMR)) for channel measurement corresponding to the CSI report of the L1-RSRP/SINR (or the cell index may be transmitted together with the CMR). The UE may determine that the L1-RSRP/SINR measured using the CMR corresponds to/is associated with the cell index. The L1-RSRP/SINR may be L1-RSRP/SINR having the cell index or a cell index corresponding to/associated with the cell index as the QCL source. The UE may determine that the L1-RSRP/SINR is L1-RSRP/SINR of a signal from a cell (another cell) having a cell index corresponding to/associated with the cell index (received cell index).

<Second Embodiment>

The bit size (number of bits) of the new ID may correspond to the number of non-serving cells configured using higher layer signaling or the like (the number of IDs of the non-serving cells, or the number of PCIs). For example, the number $N$ of bits is determined according to the following expression (1). Note that ceil(X) indicates the smallest integer equal to or greater than X.

$$N = \text{ceil}(\log_2(\text{number of non-serving cells} + 1))$$

"+ 1" in the above expression (1) corresponds to the serving cell (the present cell). For example, when the number of non-serving cells is 3, 2 bits can indicate the serving cell and three non-serving cells (non-serving cell #1, non-serving cell #2, and non-serving cell #3).

An upper limit of the number of cells that can be supported may be defined in a specification (for example, four cells including the present cell). This is to prevent increase of UE-impossible, which is caused by increase of the number of bits of the new ID and increase of the number of cells for which the UE needs to perform L1 measurement, for example.

Note that one of simple methods for supporting configuration of the TCI state associated with the non-serving cell is to directly configure the PCI in the QCL/TCI state. Note that, when the PCI is directly configured in the QCL/TCI state, overhead of RRC is increased. 10-bit RRC signaling is used for one PCI. When there is configuration of 64 TCI states from the non-serving cell, this causes costs of 640 bits. Moreover, when the SSB of the non-serving cell is configured in L1 beam measurement/report, 10 bits are used for each CMR of the SSB of the non-serving cell, and thus total overhead is further increased.

On the other hand, the new ID can be re-created from the PCI, and the new ID can be configured using the QCL/TCI state/CMR instead. With the new ID, when there is only one non-serving cell, a 1-bit new ID is sufficient to indicate the non-serving cell, and a 2-bit new ID is sufficient to indicate a maximum of three non-serving cells. By recreating the new ID based on the PCI, overhead of signaling can be significantly saved.

In a case of L1/L2-centric inter-cell mobility, it is preferable to introduce the new ID (for example, a re-created index of the non-serving cell ID) indicating non-serving cell information with which TCI state/QCL information is associated. A link between the PCI and the new ID may be configured using higher layer signaling. The bit size of the new ID may be determined by the number of non-serving cells supported in the cell (component carrier).

The UE may support configuration of a plurality of non-serving cells in the CC. Configuration of a maximum of one non-serving cell from the re-created index may be supported so as to be associated with the TCI state/QCL configuration of the CC.

According to the present embodiment, an appropriate number of bits is configured for the new ID, and thus overhead can be reduced.

<Third Embodiment>

[Aspect 3-1]

The UE may receive a relationship between the serving cell/non-serving cell index or the PCI and the new ID using higher layer signaling (may be configured with the relationship using higher layer signaling). For example, the relationship may be configured using RRC and updated using a MAC CE. Through the update using the MAC CE, switching of cells can be performed among a large number of cells, without performing RRC reconfiguration. If a large number of non-serving cells is configured using RRC from the beginning, RRC reconnection is not required (in an extreme example, 1007 non-serving cells are configured in advance). This, however, increases the number of bits of the new ID and increases the number of cells for which the UE needs to measure an L1 beam, which thus increases a UE load.

The UE may measure the CMR of the configured serving cell/non-serving cell index or the serving cell index corresponding to the PCI, and perform L1-RSRP/SINR beam report (CSI report). Alternatively, the TCI state or the unified TCI state of the configured non-serving cell index or the serving cell index corresponding to the PCI may be configured.

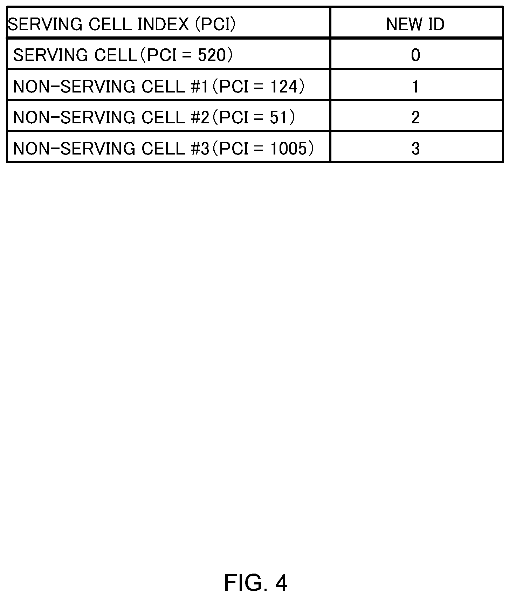

FIG. 4 is a diagram to show a first example of a relationship between the serving cell/non-serving cell index or the PCI and the new ID. For example, the relationship between the non-serving cell or the PCI and the new ID as shown in the example of FIG. 4 may be explicitly configured using higher layer signaling or the like.

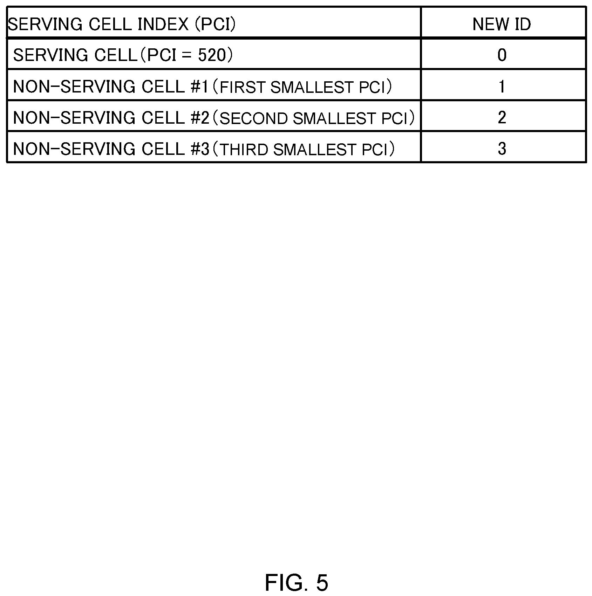

The relationship between the serving cell/non-serving cell index or the PCI and the new ID may be defined (configured) using a specific method (order). For example, a smaller new ID may be configured for a smaller index (PCI) of the non-serving cell (for example, see FIG. 5). Alternatively, a larger new ID may be configured for a larger index (PCI) of the non-serving cell. For the serving cell, constantly the same new ID (for example, 0) may be configured.

FIG. 5 is a diagram to show a second example of a relationship between the serving cell/non-serving cell index or the PCI and the new ID. In the example of FIG. 5, a smaller new ID is configured for a smaller PCI of the non-serving cell. For example, when 124, 51, and 1005 are configured for the PCI of the non-serving cell, new ID = 1 is configured for the non-serving cell whose PCI is 51, new ID = 2 is configured for the non-serving cell whose PCI is 124, and new ID = 3 is configured for the non-serving cell whose PCI is 1005.

[Aspect 3-2]

The UE may receive the MAC CE for activating (limiting, selecting, determining) at least one of a plurality of serving cell/non-serving cell indexes or PCIs (candidates of the serving cell/non-serving cell index or the PCI) received (configured) using higher layer signaling (RRC). The activated serving cell/non-serving cell index or PCI (candidate) may correspond to the new ID.

Until activation using the MAC CE, the UE may be arranged not to assume the non-serving cell (may perform operation of a case in which the non-serving cell is not configured), or may determine and use a specific non-serving cell. For example, the non-serving cell corresponding to new ID = 1, 2, 3 may be assumed.

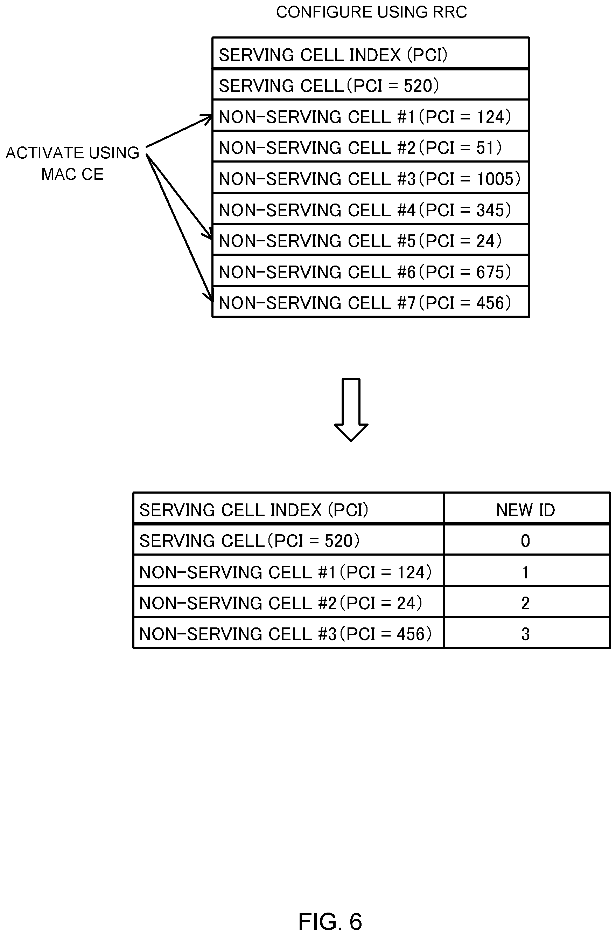

FIG. 6 is a diagram to show an example of a method of configuring a relationship between the serving cell/non-serving cell index or the PCI and the new ID. In the example shown in FIG. 6, for the UE, the serving cell and non-serving cells #1 to #7 are configured using RRC, and a part thereof is activated using the MAC CE. In the example of FIG. 6, non-serving cell #1 (PCI = 124), non-serving cell #1 (PCI = 24), and non-serving cell #1 (PCI = 456) are activated. Note that the serving cell may also be activated using the MAC CE, or the serving cell may always be configured with the new ID even when the serving cell is not activated using the MAC CE.

The example of FIG. 6 shows an example in which the new ID corresponding to the PCI is configured in order of being configured using RRC. However, similarly to aspect 3-2, a smaller new ID may be configured for a smaller PCI of the non-serving cell. For example, new ID = 1 may be configured for PCI = 24, new ID = 2 may be configured for PCI = 124, and new ID = 3 may be configured for PCI = 456.

According to the present embodiment, regardless of the number of PCIs, an appropriate number of new IDs is configured/activated, and thus overhead can be reduced.

<UE Capability>

Each example of the present disclosure may be applied based on at least one of reporting (transmission) of a corresponding UE capability (UE capability information) or performing of configuration of corresponding higher layer signaling (RRC parameter). The UE capability may be the following (1) to (5), for example. However, the UE capability is not limited to the following examples, and a UE capability indicating whether or not to support each example of the present disclosure may be used.

(1) Whether the UE supports a function of the single TRP or the multi-TRP (L1/L2 inter-cell mobility).

(2) In L1/L2 inter-cell mobility, the number of TCI states from the non-serving cell (or a total number of TCI states from both of the serving cell and the non-serving cell) for each CC (or all of the entire CCs, or all of the entire CCs for each band) that can be configured using RRC. Note that the number of TCI states configured using RRC may relate to a memory function of the UE.

(3) In L1/L2 inter-cell mobility, the number of TCI states from the non-serving cell (or a total number of TCI states from both of the serving cell and the non-serving cell) for each CC (or among all of the CCs, or all of the entire CCs for each band) that can be activated using a MAC CE. Note that the number of TCI states activated using the MAC CE may relate to a processing capability of the UE.

(4) The number of non-serving cells (the number of different PCIs) that can be supported by the UE in L1/L2 inter-cell mobility for each CC (or among all of the CCs, or among all of the CCs for each band).

(5) Whether DCI-level dynamic change of the serving cell is supported. When this is not supported, the UE can only support MAC CE-level dynamic (slower than DCI) change of the serving cell.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

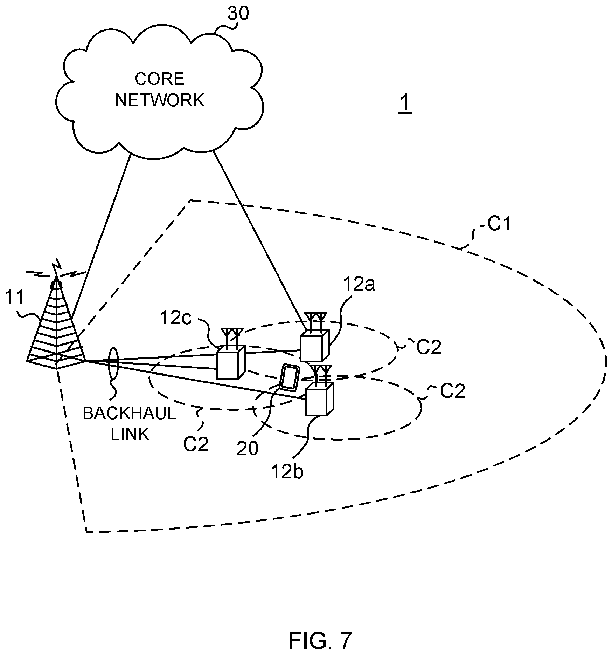

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the

PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

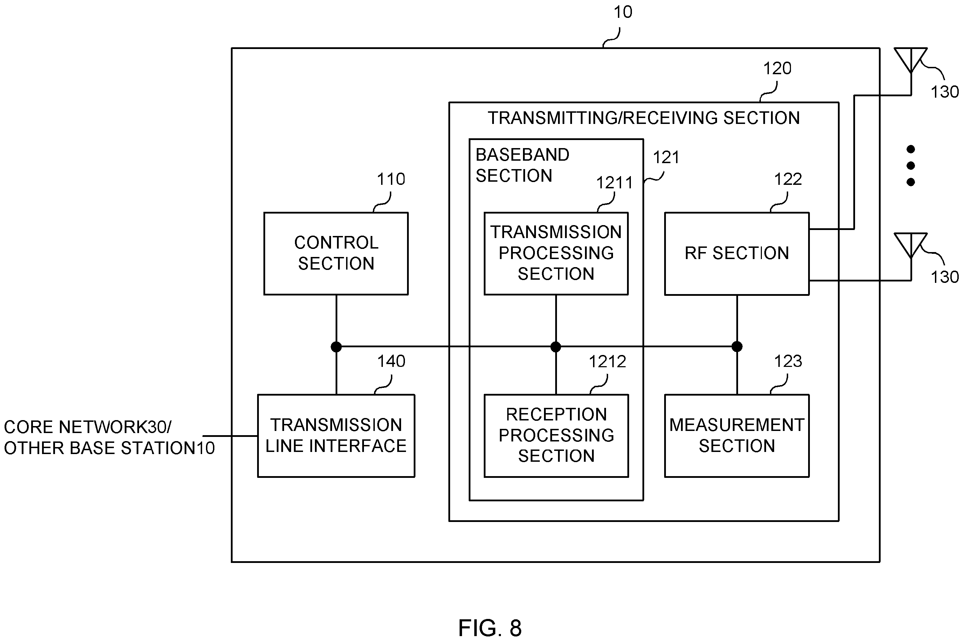

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit configuration of a specific index indicating a serving cell and a non-serving cell, the specific index being created based on a physical cell ID and different from the physical cell ID. The transmitting/receiving section 120 may receive a channel state information report corresponding to the configured specific index.

The control section 110 may control reception of the channel state information report corresponding to the configured specific index.

(User Terminal)

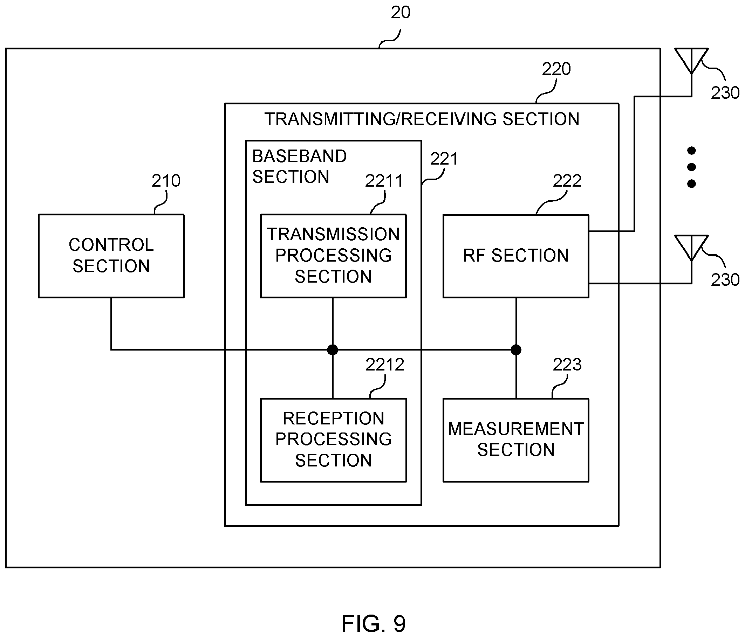

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive configuration of a specific index indicating a serving cell and a non-serving cell, the specific index being created based on a physical cell ID and different from the physical cell ID.

When inter-cell mobility of a single transmission/reception point or a plurality of transmission/reception points is applied, the transmitting/receiving section 220 may receive a transmission configuration indication (TCI) state corresponding to the specific index.

The transmitting/receiving section 220 may receive a relationship between the serving cell index, the non-serving cell index, or the physical cell ID and the specific index, using higher layer signaling.

The transmitting/receiving section 220 may receive candidates of the serving cell index, the non-serving cell index, or the physical cell ID, using higher layer signaling, and receive a Medium Access Control Control Element (MAC CE) for activating at least one of the candidates. The at least one of the candidates activated may correspond to the specific index.

The control section 210 may control transmission of a channel state information report corresponding to the configured specific index.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

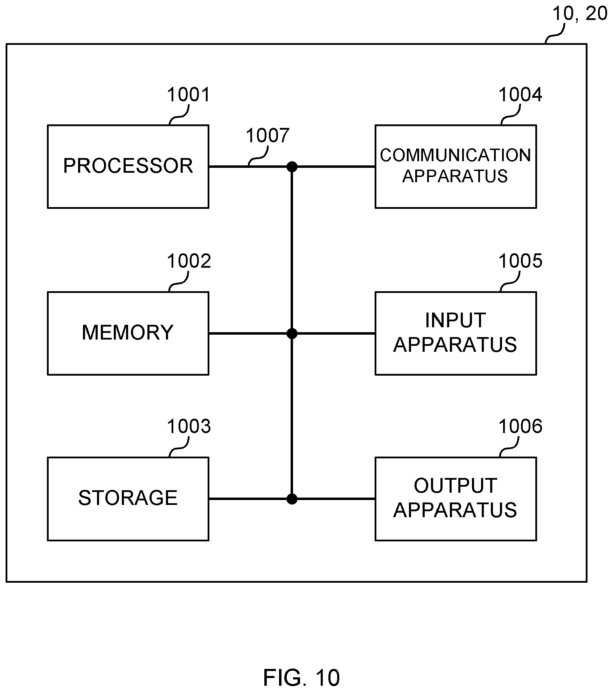

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives configuration of a specific index indicating a serving cell and a non-serving cell, the specific index being created based on a physical cell ID and different from the physical cell ID; and
   a control section that controls transmission of a channel state information report corresponding to the configured specific index.

2. The terminal according to claim 1, wherein
   when inter-cell mobility of a single transmission/reception point or a plurality of transmission/reception points is applied, the receiving section receives a transmission configuration indication (TCI) state corresponding to the specific index.

3. The terminal according to claim 1 or 2, wherein
   the receiving section receives a relationship between a serving cell index, a non-serving cell index, or the physical cell ID and the specific index, by using higher layer signaling.

4. The terminal according to any one of claims 1 to 3, wherein

   the receiving section receives candidates of a serving cell index, a non-serving cell index, or the physical cell ID, by using higher layer signaling, and receives a Medium Access Control Control Element (MAC CE) for activating at least one of the candidates, and

the at least one of the candidates activated corresponds to the specific index.

5.  A radio communication method for a terminal, the radio communication method comprising:

    receiving configuration of a specific index indicating a serving cell and a non-serving cell, the specific index being created based on a physical cell ID and different from the physical cell ID; and
    controlling transmission of a channel state information report corresponding to the configured specific index.

6.  A base station comprising:

    a transmitting section that transmits configuration of a specific index indicating a serving cell and a non-serving cell, the specific index being created based on a physical cell ID and different from the physical cell ID; and
    a control section that controls reception of a channel state information report corresponding to the configured specific index.

## FIG. 1A

configuration for DL&UL (RRC) → activation for DL&UL (MAC CE) / SSB/CSI-RS/SRS → active TCI pool for DL&UL → joint indication / indication for DL&UL (DCI) → one or subset of all DL&UL

## FIG. 1B

configuration for DL&UL (RRC) → activation for DL/UL (MAC CE) / SSB/CSI-RS/SRS → active TCI pool for DL&UL, or separate active TCI pools for DL&UL → separate indication / indication for DL (DCI) → one or subset of all DL / indication for UL (DCI) → one or subset of all UL

FIG. 2A

PCI#1

PCI#3

SERVING CELL

NON-SERVING CELL

EP 4 322 601 A1

FIG. 2B

PCI#1

PCI#3

TRP#1

TRP#2

PCI#2

SAME SERVING CELL CONFIGURATION

| 1-bit indicator or a new ID |
| CRI or SSBRI # 1 |
| 1-bit indicator or a new ID |
| CRI or SSBRI # 2 |
| … |
| 1-bit indicator or a new ID |
| CRI or SSBRI # *N* |
| RSRP/SINR #1 |
| Differential RSRP/SINR #2 |
| … |
| Differential RSRP/SINR # *N* |

FIG. 3

| SERVING CELL INDEX (PCI) | NEW ID |
|---|---|
| SERVING CELL (PCI = 520) | 0 |
| NON-SERVING CELL #1 (PCI = 124) | 1 |
| NON-SERVING CELL #2 (PCI = 51) | 2 |
| NON-SERVING CELL #3 (PCI = 1005) | 3 |

FIG. 4

| SERVING CELL INDEX (PCI) | NEW ID |
|---|---|
| SERVING CELL (PCI = 520) | 0 |
| NON-SERVING CELL #1 (FIRST SMALLEST PCI) | 1 |
| NON-SERVING CELL #2 (SECOND SMALLEST PCI) | 2 |
| NON-SERVING CELL #3 (THIRD SMALLEST PCI) | 3 |

FIG. 5

CONFIGURE USING RRC

| SERVING CELL INDEX (PCI) |
|---|
| SERVING CELL (PCI = 520) |
| NON-SERVING CELL #1 (PCI = 124) |
| NON-SERVING CELL #2 (PCI = 51) |
| NON-SERVING CELL #3 (PCI = 1005) |
| NON-SERVING CELL #4 (PCI = 345) |
| NON-SERVING CELL #5 (PCI = 24) |
| NON-SERVING CELL #6 (PCI = 675) |
| NON-SERVING CELL #7 (PCI = 456) |

ACTIVATE USING
MAC CE

⇓

| SERVING CELL INDEX (PCI) | NEW ID |
|---|---|
| SERVING CELL (PCI = 520) | 0 |
| NON-SERVING CELL #1 (PCI = 124) | 1 |
| NON-SERVING CELL #2 (PCI = 24) | 2 |
| NON-SERVING CELL #3 (PCI = 456) | 3 |

FIG. 6

FIG. 7

FIG. 8

EP 4 322 601 A1

FIG. 9

10, 20

| | | |
|---|---|---|
| 1001 | 1007 | 1004 |
| PROCESSOR | | COMMUNICATION APPARATUS |
| 1002 | | 1005 |
| MEMORY | | INPUT APPARATUS |
| 1003 | | 1006 |
| STORAGE | | OUTPUT APPARATUS |

FIG. 10

**EP 4 322 601 A1**

# INTERNATIONAL SEARCH REPORT

International application No.

**PCT/JP2021/014519**

### A. CLASSIFICATION OF SUBJECT MATTER

*H04W 24/10*(2009.01)i; *H04W 36/16*(2009.01)i
FI: H04W24/10; H04W36/16

According to International Patent Classification (IPC) or to both national classification and IPC

### B. FIELDS SEARCHED

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | SONY, Considerations on inter-cell operation [online], 3GPP TSG RAN WG1 #104-e R1-2100846, [retrieved on 25 October 2021], internet <URL:https://www.3gpp.org/ftp/tsg_ran/WG1_RL1/TSGR1_104-e/Docs/R1-2100846.zip>, 19 January 2021, pp. 1-3 section 2.1 | 1-6 |
| A | QUALCOMM INC., Enhancements on Multi-beam Operation [online], 3GPP TSG RAN WG1 #104-e R1- 2101446, [retrieved on 25 October 2021], internet <URL: https://www.3gpp.org/ftp/tsg_ran/WG1_RL1/TSGR1_104-e/Docs/R1-2101446.zip>, 19 January 2021, pp. 1-15 chapter 2 | 1-6 |
| A | WO 2018/173232 A1 (NTT DOCOMO, INC.) 27 September 2018 (2018-09-27) paragraphs [0039], [0040], [0062], [0067] | 1-6 |
| A | WO 2018/198342 A1 (NTT DOCOMO, INC.) 01 November 2018 (2018-11-01) paragraphs [0028], [0100]-[0107] | 1-6 |
| T | NTT DOCOMO, INC, Discussion on multi-beam operation [online], 3GPP TSG RAN WG1 #105 R1-2105683, [retrieved on 25 October 2021], internet <URL: https://www.3gpp.org/ftp/TSG_RAN/WG1_RL1/TSGR1_105-e/Docs/R1-2105683.zip>, 12 May 2021, pp. 1-17 section 3.2 | 1-6 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 October 2021** | **16 November 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

33

## INTERNATIONAL SEARCH REPORT
**Information on patent family members**

International application No.

**PCT/JP2021/014519**

| Patent document cited in search report | | | Publication date (day/month/year) | Patent family member(s) | | | Publication date (day/month/year) |
|---|---|---|---|---|---|---|---|
| WO | 2018/173232 | A1 | 27 September 2018 | US | 2020/0053738 | A1 | |
| | | | | paragraphs [0057], [0058], [0080], [0086] | | | |
| | | | | EP | 3606261 | A1 | |
| | | | | CN | 110679197 | A | |
| WO | 2018/198342 | A1 | 01 November 2018 | US | 2020/0145981 | A1 | |
| | | | | paragraphs [0045], [0117]-[0124] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010